# EUROPEAN PATENT SPECIFICATION

(11) **EP 4 394 325 B1**
(45) Date of publication and mention of the grant of the patent: **09.12.2026**
(21) Application number: 21957919.0
(22) Date of filing: 24.09.2021
(51) Int. Cl.: B62D 15/02, G01C 21/36, G06Q 10/047

(54) **NAVIGATION METHOD AND RELATED APPARATUS**
NAVIGATIONSVERFAHREN UND ZUGEHÖRIGE VORRICHTUNG
PROCÉDÉ DE NAVIGATION ET APPAREIL ASSOCIÉ

(43) Date of publication of application: 03.07.2024
(73) Proprietor: Yinwang Intelligent Technologies Co., Ltd., Shenzhen, Guangdong 518129 (CN)
(72) Inventor: HU, Wenxiao, Shenzhen, Guangdong 518129 (CN)
(74) Representative: Gill Jennings & Every LLP
(86) International application number: PCT/CN2021/120439
(87) International publication number: WO 2023/044794

(56) References cited:
- WO-A1-2018/109519
- CN-A- 107 430 007
- CN-A- 110 155 060
- CN-A- 112 050 824
- US-A1- 2017 010 613
- US-A1- 2017 219 364
- US-A1- 2017 314 957
- US-A1- 2017 370 740
- US-A1- 2019 113 353
- US-A1- 2019 248 379
- US-A1- 2020 011 671
- US-B1- 10 036 648

## Description

### TECHNICAL FIELD

This application relates to the field of intelligent driving technologies, and in particular, to a navigation method and a related apparatus.

### BACKGROUND

At present, self-driving technologies developing rapidly. During self driving, a self-driving automobile usually relies on a navigation map technology. Development of the navigation map technology creates a favorable condition for optimizing a self-driving path. Combining the navigation map technology with the self-driving technologies has become a development direction for the self-driving field.

In a conventional technology, a user inputs a start point and a destination in a navigation map. The navigation map plans one or more travel routes from the start point to the destination, and then recommends a travel route to the user according to user requirements, and displays information of the recommended travel route. For example, the travel route recommended for the user includes a travel route with the shortest distance, a travel route with the shortest duration, a travel route passing by a specified place, a travel route not passing by a specified place, or the like. However, the route recommended by using this navigation map technology may not include a self-driving road segment, and is not applicable to the self-driving automobile.

Therefore, how to recommend a travel route for a self-driving vehicle becomes an urgent problem to be resolved.

Relevant background art includes US 2017/370740 A1, US 2017/010613 A1, US 2017/219364 A1, US 10 036 648 B1, and US 2019/248379 A1.

US 2017/370740 A1 has been identified as the closet prior art to the subject-matter of the invention and discloses a navigation system that generates multiple route options for a vehicle based on the starting and ending points of a trip and provides information regarding which segments of each route require manual driving or the vehicle can use automated driving. The system comprises a HMI for providing to the user useful data regarding the the different routes.

### SUMMARY

This application provides a navigation method and a related apparatus, which are more applicable to a self-driving vehicle and improve driving experience of a user.

According to a first aspect, this application provides a navigation method as set out in appended claim 1. The method includes: obtaining target location information of a vehicle; and displaying recommended route information based on the target location information. The information about the recommended route includes information about a self-driving road segment, and the information about the self-driving road segment includes location information of the self-driving road segment and mileage information of the self-driving road segment.

In this method, the information about the recommended route displayed based on the obtained information about the target location of the vehicle includes the information about the self-driving road segment, and the information about the self-driving road segment includes the location information and the mileage information of the self-driving road segment. Compared with a navigation method that provides only a global route, mileage information, an expected travel time, a charging status, traffic light information, and the like, this method is more applicable to a self-driving vehicle, and improves driving experience of a user.

In a possible implementation, the method further includes: displaying, in different display manners, different road segments in the information about the recommended route, where the different road segments include a manual driving road segment and the self-driving road segment.

In this implementation, different display manners are used to display the manual driving road segment and the self-driving road segment in the information about the recommended route. Recommended route planning for the self-driving vehicle mostly includes the manual driving road segment and the self-driving road segment. When the information about the recommended route is displayed, the manual driving road segment and the self-driving road segment that are planned are displayed in the different display manners, so that the user may clearly know which road segment is the manual driving road segment and which road segment is the self-driving road segment. This further improves the driving experience of the user.

In a possible implementation, the self-driving road segment includes an emergency assistance road segment, a partial driving assistance road segment, a combined driving assistance road segment, a conditional self-driving road segment, a highly self-driving road segment, and a fully self-driving road segment.

In this implementation, the emergency assistance road segment, the partial driving assistance road segment, the combined driving assistance road segment, the conditional self-driving road segment, the highly self-driving road segment, and the fully self-driving road segment that are included in the self-driving road segment are displayed in the different display manners, so that the user may know which self-driving mode is specifically used for each self-driving road segment. This further improves the driving experience of the user.

In a possible implementation, the target location information includes location information of a parking spot, and location information of a destination in the information about the recommended route includes the location information of the parking spot.

In this implementation, the obtained information about the target location includes the location information of the parking spot, and the destination in the information about the recommended route obtained based on the location information of the parking spot may be a parking spot indicated by the location information of the parking spot. Compared with a case in which the destination in the information about the recommended route is a parking lot, this further improves the driving experience of the user.

In a possible implementation, the self-driving road segment further includes a parking road segment.

In this implementation, when the location information of the destination in the information about the recommended route is the location information of the parking spot, the information about the self-driving road segment in the information about the recommended route further includes information of the parking road segment.

In a possible implementation, the parking road segment includes an automatic parking assist APA road segment, a remote parking assist RPA road segment, a home zone parking assist HPA road segment, and an automatic valet parking AVP road segment.

In this implementation, the automatic parking assist road segment, the remote parking assist road segment, the home zone parking assist road segment, and the automatic valet parking road segment that are included in the parking road segment are displayed in the different display manners, so that the user may know which parking mode is specifically used for the parking road segment. This further improves the driving experience of the user.

In a possible implementation, the displaying, in different display manners, different road segments in the information about the recommended route includes: displaying the different road segments in the information about the recommended route by using different colors.

In a possible implementation, the displaying recommended route information based on the target location information further includes: displaying mileage information of each of the different road segments.

In this implementation, the information about the recommended route displayed based on the target location information further includes displaying the mileage information of each of the different road segments, so that the user knows a travel distance in each road segment. This further improves the driving experience of the user.

In a possible implementation, the method further includes: when the vehicle travels in any one of the road segments, displaying mileage information of a distance between a current location of the vehicle and a starting location of a next road segment.

In this implementation, when the vehicle travels in any one of the road segments in the information about the recommended route, mileage information of a distance between a location of the vehicle in a current road segment and the starting location of the next road segment is displayed, so that the user may know a current distance between the vehicle and the next road segment, that is, the user may know travel process information of the vehicle in the current road segment. This improves the driving experience of the user.

In a possible implementation, the method further includes: when the mileage information of the distance between the current location of the vehicle and the starting location of the next road segment is less than or equal to preset mileage information, prompting that the vehicle is about to switch to the next road segment.

In this implementation, when the mileage information of the distance between the current location of the vehicle and the starting location of the next road segment is less than or equal to the preset mileage information, a prompt that the vehicle is about to switch to the next road segment is given. In this way, the user may prepare in advance when the vehicle is about to enter the next road segment. For example, when the vehicle is currently in the self-driving road segment and is about to enter the manual driving road segment, after receiving the prompt that the vehicle is about to switch to the next road segment, the user may adjust a state in advance and prepare for manual driving. This improves the driving experience of the user and safety of a driving process.

In a possible implementation, a manner of the prompting that the vehicle is about to switch to the next road segment includes a text prompt and/or a voice prompt.

The method further includes: displaying whole-course statistical information and statistical information of the different road segments after the vehicle arrives at, based on the information about the recommended route, the target location indicated by the target location information, where the whole-course statistical information includes total mileage information, total duration information, average hourly speed information, and an energy efficiency ratio, and the statistical information of the different road segments includes mileage information and duration information of each of the different road segments.

In the implementation, after the vehicle arrives at, based on the information about the recommended route, the target location indicated by the target location information, the whole-course statistical information and the statistical information of each of the different road segments are displayed, where the whole-course statistical information includes the total mileage information, the total duration information, the average hourly speed information, and the energy efficiency ratio, and the statistical information of the different road segments includes the mileage information and duration information of each of the different road segments. This improves the driving experience of the user.

According to a second aspect, this application provides a navigation apparatus as set out in appended claim 12. The apparatus includes: an obtaining module, configured to obtain target location information of a vehicle; and a display module, configured to display recommended route information based on the target location information, where the information about the recommended route includes information about a self-driving road segment, and the information about the self-driving road segment includes location information of the self-driving road segment and mileage information of the self-driving road segment.

In a possible implementation, the display module is further configured to: display, in different display manners, different road segments in the information about the recommended route, where the different road segments include a manual driving road segment and the self-driving road segment.

In a possible implementation, the self-driving road segment includes an emergency assistance road segment, a partial driving assistance road segment, a combined driving assistance road segment, a conditional self-driving road segment, a highly self-driving road segment, and a fully self-driving road segment.

In a possible implementation, the target location information includes location information of a parking spot, and location information of a destination in the information about the recommended route includes the location information of the parking spot.

In a possible implementation, the self-driving road segment further includes a parking road segment.

In a possible implementation, the parking road segment includes an automatic parking assist APA road segment, a remote parking assist RPA road segment, a home zone parking assist HPA road segment, and an automatic valet parking AVP road segment.

In a possible implementation, the display module is specifically configured to: display the different road segments in the information about the recommended route by using different colors.

In a possible implementation, the display module is further configured to: display mileage information of each of the different road segments.

In a possible implementation, the display module is further configured to: when the vehicle travels in any one of the road segments, display mileage information of a distance between a current location of the vehicle and a starting location of a next road segment.

In a possible implementation, the apparatus further includes a prompt module, where the prompt module is configured to: when the mileage information of the distance between the current location of the vehicle and the starting location of the next road segment is less than or equal to preset mileage information, prompt that the vehicle is about to switch to the next road segment.

In a possible implementation, the prompt module is specifically configured for: a text prompt and/or a voice prompt.

The display module is further configured to: display whole-course statistical information and statistical information of the different road segments after the vehicle arrives at, based on the information about the recommended route, the target location indicated by the target location information, where the whole-course statistical information includes total mileage information, total duration information, average hourly speed information, and an energy efficiency ratio, and the statistical information of the different road segments includes mileage information and duration information of each of the different road segments.

For beneficial effects of the second aspect and the possible implementations of the second aspect, refer to beneficial effects of the first aspect and the possible implementations of the first aspect. Details are not described herein again.

According to a third aspect, this application provides a navigation apparatus. The apparatus may include a processor coupled to a memory. The memory is configured to store program code, and the processor is configured to execute the program code in the memory, to implement the method according to any one of the first aspect or the implementations of the first aspect.

Optionally, the apparatus may further include the memory.

According to a fourth aspect, this application provides a self-driving vehicle as set out in appended claim 13, including the navigation apparatus according to any one of the second aspect or the possible implementations of the second aspect.

According to a fifth aspect, this application provides a chip, including at least one processor and a communications interface. The communications interface and the at least one processor are interconnected through a line, and the at least one processor is configured to run a computer program or instructions, to perform the method according to any one of the first aspect or the possible implementations of the first aspect.

According to a sixth aspect, this application provides a computer-readable medium as set out in appended claim 14. The computer-readable medium stores program code to be executed by a device, and the program code include instructions used to perform the method according to any one of the first aspect or the possible implementations of the first aspect.

According to a seventh aspect, this application provides a computer program product including instructions as set out in appended claim 15. When the computer program product is run on a computer, the computer is enabled to perform the method according to any one of the first aspect or the possible implementations of the first aspect.

### BRIEF DESCRIPTION OF DRAWINGS

FIG. 1 is a functional block diagram of a vehicle according to an embodiment of this application;
FIG. 2 is a schematic flowchart of a navigation method according to an embodiment of this application;
FIG. 3 is a schematic diagram of recommended route information according to an embodiment of this application;
FIG. 4 is a schematic diagram of a parking road segment according to an embodiment of this application;
FIG. 5 is a schematic diagram of prompt information of switching different road segments according to an embodiment of this application;
FIG. 6 is a schematic diagram of another prompt information of switching different road segments according to an embodiment of this application;
FIG. 7 is a schematic diagram of displaying travel process information according to an embodiment of this application;
FIG. 8 is a schematic diagram of travel information according to an embodiment of this application;
FIG. 9 is a schematic flowchart of another navigation method according to an embodiment of this application;
FIG. 10 is a schematic diagram of a structure of a navigation apparatus according to an embodiment of this application; and
FIG. 11 is a schematic diagram of a structure of a navigation apparatus according to another embodiment of this application.

### DESCRIPTION OF EMBODIMENTS

To clearly describe technical solutions in embodiments of this application, terms such as "first" and "second" are used in the embodiments of this application to distinguish between same items or similar items that provide basically same functions or purposes. For example, a first value and a second value are merely used for distinguishing between different values, and a sequence thereof is not limited. A person skilled in the art may understand that the terms such as "first" and "second" do not limit a quantity or an execution sequence, and the terms such as "first" and "second" do not indicate a definite difference.

It should be noted that in this application, the term such as "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In this application, "at least one" means one or more, and "a plurality of" means two or more. In addition, "and/or" describes an association between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items" or a similar expression means any combination of these items, including any combination of a single item or a plurality of items. For example, at least one of a, b, or c may indicate: a, b, c, a and b, a and c, b and c, or a, b, and c, where a, b, and c may be singular or plural.

A navigation method according to an embodiment of this application may be applied to a scenario such as self-driving scenario. For example, in the self-driving scenario, a recommended self-driving route of a vehicle from a starting location to a target location may be planned and displayed based on the navigation method according to the embodiment of this application, to perform navigation for the vehicle based on information about the recommended self-driving route. For example, in the self-driving scenario, the navigation method according to the embodiment of this application may be applied to the vehicle, a chip in the vehicle, or the like.

Currently, the Society of Automotive Engineers (society of automotive engineers, SAE) classifies the self-driving into six levels: L0 to L5. Systems L0 to L2 are driver assistance systems, and systems L3 to L5 are self-driving systems.

The driver assistance system mainly provides functions such as safety warning, lane centering, and adaptive cruise control. A driver still needs to continuously monitor a vehicle travel state, and perform steering, braking, or acceleration as required. L0 is no driving automation, in which the driver fully controls the automobile, and can only obtain assistance from a warning or intervention system. L1 is driver assistance, in which a driving system may provide driver assistance for one operation of a steering wheel and an accelerator based on a driving environment, and other driving actions are performed by the driver. L2 is partial driving automation, in which the driving system may provide the driver assistance for a plurality of operations of the steering wheel and the accelerator based on the driving environment, and other driving actions are performed by the driver.

The self-driving system is graded based on a condition for starting a system and whether the driver needs to take over the vehicle temporarily. After the system is started, the self-driving system completes control over the vehicle. L3 is conditional driving automation, in which the self-driving system completes all driving operations, and the driver needs to respond to all system requests. L4 is high driving automation, in which the self-driving system completes all the driving operations, and the driver only needs to respond to some system requests. L5 is full driving automation, in which the self-driving system can independently complete all the driving operations under all road and environment conditions that the driver can handle.

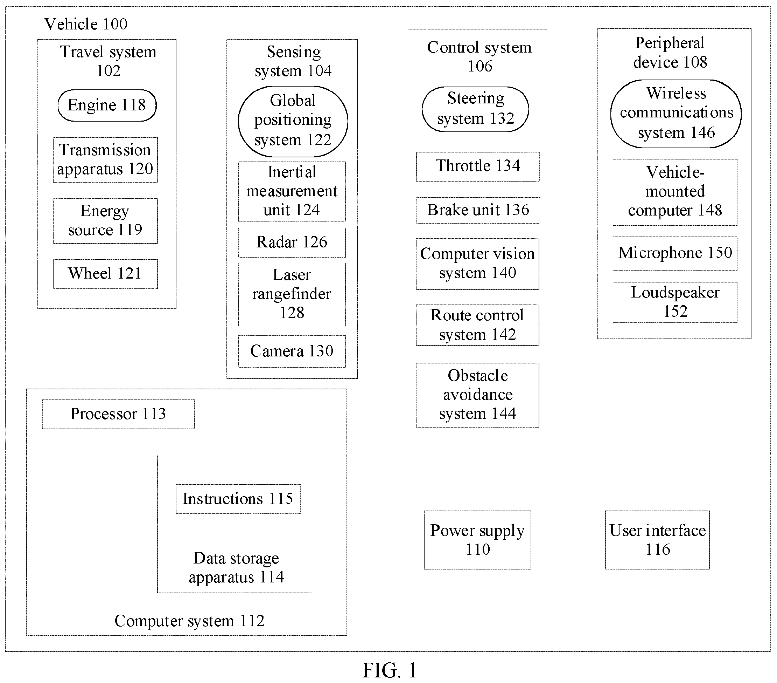

FIG. 1 is a functional block diagram of a vehicle according to an embodiment of this application. As shown in FIG. 1, a vehicle 100 is set to be in any driving mode of L1 to L5. For example, if the vehicle 100 is set to be in any driving mode of L1 to L4, when in a self-driving mode, the vehicle 100 may further determine a current situation of the vehicle and an ambient environment through a manual operation, for example, determine possible actions of at least one another vehicle in the ambient environment and determine a confidence level corresponding to a possibility that the another vehicle performs the possible actions, and control the vehicle 100 based on the determined information. For another example, when the vehicle 100 is in a driving mode of L5, the vehicle 100 may automatically perform all driving-related operations.

The vehicle 100 may include various subsystems, for example, a travel system 102, a sensor system 104, a control system 106, one or more peripheral devices 108, a power supply 110, a computer system 112, and a user interface 116. Optionally, the vehicle 100 may include more or fewer subsystems, and each subsystem may include a plurality of components. In addition, each subsystem and component of the vehicle 100 may be interconnected in a wired or wireless manner.

The travel system 102 may include a component that provides power for the vehicle 100 to move. In an embodiment, the travel system 102 may include an engine 118, an energy source 119, a transmission apparatus 120, and a wheel/tire 121. The engine 118 may be an internal combustion engine, a motor, a fully automatic engine, an air compression engine, or another type of an engine combination, for example, a hybrid engine composed of a gasoline engine and a motor, or a hybrid engine composed of an internal combustion engine and an air compression engine. The engine 118 converts the energy source 119 into mechanical energy.

Examples of the energy source 119 include gasoline, diesel, other oil-based fuels, propane, other compressed gas-based fuels, ethanol, solar panels, batteries, and other power sources. The energy source 119 may also provide energy for another system of the vehicle 100.

The transmission apparatus 120 may transmit mechanical power from the engine 118 to the wheel 121. The transmission apparatus 120 may include a gearbox, a differential, and a drive shaft. In an embodiment, the transmission apparatus 120 may further include another component, for example, a clutch. The drive shaft may include one or more shafts that may be coupled to one or more of the wheels 121.

The sensor system 104 may include several sensors that can sense information about the ambient environment of the vehicle 100. For example, the sensor system 104 may include a positioning system 122 (the positioning system may be a GPS system, a BeiDou system, or another positioning system), an inertial measurement unit (inertial measurement unit, IMU) 124, a radar 126, a laser rangefinder 128, and a camera 130. The sensor system 104 may further include a sensor (for example, an in-vehicle air quality monitor, a fuel gauge, or an engine oil thermometer) of an internal system of the monitored vehicle 100. Sensor data from one or more of these sensors can be used to detect an object and corresponding features (a position, a shape, a direction, a speed, and the like) of the object. Such detection and recognition are key functions of a safe operation of the autonomous vehicle 100.

The positioning system 122 may be configured to estimate a geographical location of the vehicle 100. The IMU 124 is configured to sense a location change and an orientation change of the vehicle 100 based on inertial acceleration. In an embodiment, the IMU 124 may be a combination of an accelerometer and a gyroscope.

The radar 126 may sense an object in the ambient environment of the vehicle 100 by using a radio signal. In some embodiments, in addition to sensing an object, the radar 126 may be further configured to sense a speed and/or a moving direction of the object.

The laser rangefinder 128 may sense, by using a laser, an object in an environment in which the vehicle 100 is located. In some embodiments, the laser rangefinder 128 may include one or more laser sources, a laser scanner, one or more detectors, and another system component.

The camera 130 may be configured to capture a plurality of images of the ambient environment of the vehicle 100. The camera 130 may be a static camera or a video camera.

The control system 106 controls operations of the vehicle 100 and components of the vehicle 100. The control system 106 may include various components, including a steering system 132, a throttle 134, a brake unit 136, a sensor fusion algorithm 138, a computer vision system 140, a route control system 142, and an obstacle avoidance system 144.

The steering system 132 may be operated to adjust a moving direction of the vehicle 100. For example, in an embodiment, the steering system 132 may be a steering wheel system.

The throttle 134 is configured to control an operating speed of the engine 118 and further control a speed of the vehicle 100.

The brake unit 136 is configured to control the vehicle 100 to decelerate. The brake unit 136 may use friction to slow down the wheel 121. In another embodiment, the brake unit 136 may convert kinetic energy of the wheel 121 into a current. The brake unit 136 may alternatively use another form to reduce a rotational speed of the wheel 121, to control the speed of the vehicle 100.

The computer vision system 140 may operate to process and analyze an image captured by the camera 130, to identify an object and/or a feature in the ambient environment of the vehicle 100. The object and/or the feature may include a traffic signal, a road boundary, and an obstacle. The computer vision system 140 may use an object recognition algorithm, a structure from motion (structure from motion, SFM) algorithm, video tracking, and another computer vision technology. In some embodiments, the computer vision system 140 may be configured to: draw a map for an environment, track an object, estimate a speed of the object, and the like.

The route control system 142 is configured to determine a travel route of the vehicle 100. In some embodiments, the route control system 142 may combine data from the sensor 138, a global positioning system (global positioning system, GPS) 122, and one or more predetermined maps to determine the travel route of the vehicle 100.

The obstacle avoidance system 144 is configured to identify, evaluate, and avoid or otherwise bypass a potential obstacle in the environment of the vehicle 100.

Certainly, in an instance, the control system 106 may be added with or alternatively include components other than those shown and described. Alternatively, some of the foregoing components may be removed.

The vehicle 100 interacts with an external sensor, another vehicle, another computer system, or a user by using the peripheral device 108. The peripheral device 108 may include a wireless communications system 146, a vehicle-mounted computer 148, a microphone 150, and/or a speaker 152.

In some embodiments, the peripheral device 108 provides a means for a user of the vehicle 100 to interact with the user interface 116. For example, the vehicle-mounted computer 148 may provide information for the user of the vehicle 100. The user interface 116 may further operate the vehicle-mounted computer 148 to receive a user input. The vehicle-mounted computer 148 may perform an operation through a touchscreen. In another case, the peripheral device 108 may provide a means for the vehicle 100 to communicate with another device located in the vehicle. For example, the microphone 150 may receive audio (for example, a voice command or another audio input) from the user of the vehicle 100. Similarly, the speaker 152 may output audio to the user of the vehicle 100.

In a possible implementation, a display screen of the vehicle-mounted computer 148 may further display the information about the recommended route provided in the navigation method in this embodiment of this application, so that the user can drive based on the information about the recommended route displayed on the display screen.

The wireless communications system 146 may wirelessly communicate with one or more devices directly or through a communications network. For example, the wireless communications system 146 may use 3G cellular communications such as code division multiple access (code division multiple access, CDMA), EVDO, a global system for mobile communications (global system for mobile communications, or GSM)/a general packet radio service (general packet radio service, GPRS), 4G cellular communications such as long term evolution (long term evolution, LTE) of a universal mobile communication technology, or 5G cellular communications. The wireless communications system 146 may communicate with a wireless local area network (wireless local area network, WLAN) by using Wi-Fi. In some embodiments, the wireless communications system 146 may directly communicate with a device through an infrared link, Bluetooth, or a ZigBee protocol (ZigBee). Other wireless protocols, for example, various vehicle communications systems, such as the wireless communications system 146, may include one or more dedicated short range communications (dedicated short range communications, DSRC) devices, and these devices may include public and/or private data communication between the vehicle and/or a roadside station.

The power supply 110 may provide power for various components of the vehicle 100. In an embodiment, the power supply 110 may be a rechargeable lithium-ion or lead-acid battery. One or more battery packs of such a battery may be configured as a power supply to supply power to the various components of the vehicle 100. In some embodiments, the power supply 110 and the energy source 119 may be implemented together, for example, in some pure electric vehicles.

Some or all of functions of the vehicle 100 are controlled by the computer system 112. The computer system 112 may include at least one processor 113. The processor 113 executes instructions 115 stored in a non-transitory computer-readable medium such as a data storage apparatus 114. The computer system 112 may alternatively be a plurality of computing devices that control an individual component or a subsystem of the vehicle 100 in a distributed manner.

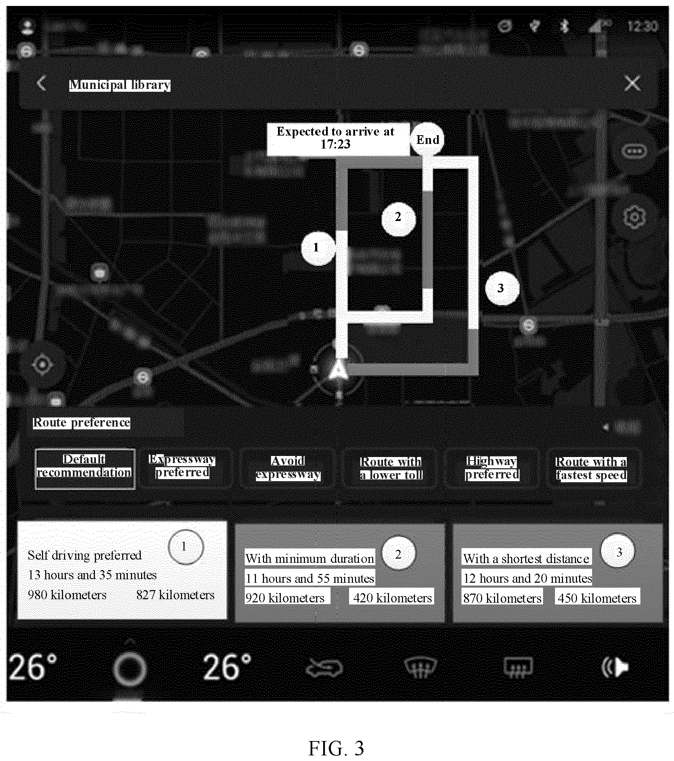

The processor 113 may be any conventional processor, such as a commercially available central processing unit (central processing unit, CPU). Alternatively, the processor may be an application specific integrated circuit (application specific integrated circuit, ASIC) or another dedicated device of a hardware-based processor. Although FIG. 3 functionally illustrates another element of the processor, a memory, and the computer system 112 in a same block, a person of ordinary skill in the art should understand that the processor, a computer, or the memory may actually include a plurality of processors, computers, or memories that may or may not be stored in a same physical housing. For example, the memory may be a hard disk drive or another storage medium located in a housing different from that of the computer. Therefore, it is understood that a reference to the processor or the computer includes a reference to a set of processors or computers or memories that may or may not operate in parallel. Different from using a single processor to perform the steps described herein, some components such as a steering component and a deceleration component may include respective processors. The processor performs only computation related to a component-specific function.

In various aspects described herein, the processor may be located far away from the vehicle and wirelessly communicate with the vehicle. In another aspect, some processes described herein are performed on a processor disposed inside the vehicle, while other processes are performed by a remote processor, including performing a step necessary for single manipulation.

In some embodiments, the data storage apparatus 114 may include the instructions 115 (for example, program logic), and the instructions 115 may be executed by the processor 113 to perform various functions of the vehicle 100, including the functions described above. The data storage apparatus 114 may further include additional instructions, including instructions for sending data to, receiving data from, interacting with, and/or controlling one or more of the propulsion system 102, the sensor system 104, the control system 106, and the peripheral device 108.

In addition to the instructions 115, the data storage apparatus 114 may further store data, such as a road map, route information, a location, a direction, a speed, and other vehicle data of the vehicle, and other information. Such information may be used by the vehicle 100 and the computer system 112 when the vehicle 100 operates in an autonomous mode, a semi-autonomous mode, and/or a manual mode.

The user interface 116 is configured to provide information for or receive information from the user of the vehicle 100. Optionally, the user interface 116 may include one or more input/output devices in a set of the peripheral devices 108, for example, the wireless communications system 146, the vehicle-mounted computer 148, the microphone 150, and the speaker 152.

The computer system 112 may control the functions of the vehicle 100 based on inputs received from the various subsystems (for example, the travel system 102, the sensor system 104, and the control system 106) and from the user interface 116. For example, the computer system 112 may use an input from the control system 106 to control a steering unit 132 to avoid an obstacle detected by the sensor system 104 and the obstacle avoidance system 144. In some embodiments, the computer system 112 may operate to provide control on the vehicle 100 and the subsystems of the vehicle 100 in many aspects.

Optionally, one or more of the foregoing components may be installed separately from or associated with the vehicle 100. For example, the data storage apparatus 114 may exist, being partially or completely separate from the vehicle 100. The foregoing components may be communicatively coupled together in a wired and/or wireless manner.

Optionally, the foregoing components are merely examples. In actual application, components in the foregoing modules may be added or removed according to an actual requirement. FIG. 1 should not be construed as a limitation on this embodiment of this application.

In addition to providing an instruction for adjusting a speed or a travel route of a self-driving automobile, the computing device may further provide an instruction for modifying a steering angle of the vehicle 100, so that the self-driving automobile follows a given track and/or maintains safe horizontal and vertical distances from an obstacle (for example, a vehicle in an adjacent lane on a road) near the self-driving automobile.

The vehicle 100 may be a car, a truck, a bus, an entertainment vehicle, a playground vehicle, a construction device, a tram, a golf cart, and the like. This is not specifically limited in this embodiment of this application.

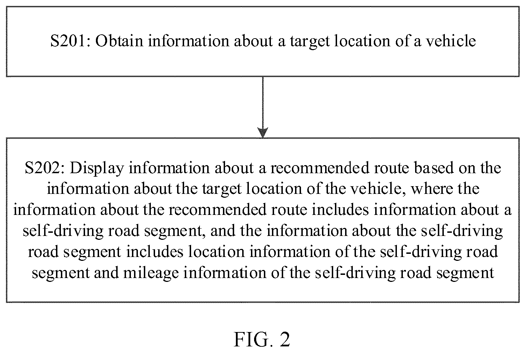

FIG. 2 is a schematic flowchart of a navigation method according to an embodiment of this application. As shown in FIG. 2, the method at least includes S201 to S202.

S201: Obtain target location information of a vehicle.

The target location information of the vehicle represents location information of a destination that the vehicle expects to arrive at.

In an example, location information of the target location is determined based on a name of a target location input by a user.

For example, the name of the target location input by the user is a "municipal library", and specific location information of the target location is determined in a map based on the name of the target location, namely, the "municipal library".

In most cases, a parking operation is required after the vehicle arrives at a destination.

In a possible implementation, the name of the target location input by the user is a name of the destination. For example, if the name of the target location input by the user is the "municipal library", the determined location information of the target location is location information of the municipal library. After arriving at the municipal library, the user looks for a parking lot and a parking spot by using another method.

In another possible implementation, the name of the target location input by the user is a name of a parking lot at the destination. For example, if the name of the target location input by the user is a "parking lot at the municipal library", the determined location information of the target location is location information of the parking lot at the municipal library. After arriving at the parking lot at the municipal library, the user looks for a parking spot in the parking lot by using another method.

In still another possible implementation, the name of the target location input by the user is a name of a parking spot in a parking slot at the destination. For example, the name of the target location input by the user is a "parking spot B1-13 in a parking lot at the municipal library", where B1 represents a lower ground floor 1 of the parking lot at the municipal library, and 13 represents a number of the parking spot. In this case, the determined location information of the target location is location information of the parking spot No. 13 on the lower ground floor 1 at the municipal library. The user may directly navigate to a corresponding parking spot. This saves time and improves parking efficiency.

S202: Display recommended route information based on the target location information of the vehicle, where the information about the recommended route includes information about a self-driving road segment, and the information about the self-driving road segment includes location information of the self-driving road segment and mileage information of the self-driving road segment.

The recommended route is planned based on the obtained information about the target location of the vehicle, and the information about the recommended route is displayed. The information about the recommended route includes the information about the self-driving road segment, where the information about the self-driving road segment includes the location information of the self-driving road segment and the mileage information of the self-driving road segment. A recommended route preferred for self driving is selected by default for navigation. The recommended route preferred for self driving represents a recommended route of a plurality of recommended routes, which shows the largest proportion of mileage of the self-driving road segment in total mileage of the recommended route.

In a possible implementation, the information about the recommended route further includes information about proportions of road segments in the recommended route in a whole course of the recommended route, and the road segments in the recommended route include the self-driving road segment and a manual driving road segment. The information about the recommended route displays the mileage information of the self-driving road segment, and information about proportions of the self-driving road segment and the manual driving road segment in the total mileage of the recommended route.

Optionally, each of the manual driving road segment and the self-driving road segment that are in the information about the recommended route is displayed in different display manners.

For example, each of the manual driving road segment and the self-driving road segment in the recommended route is displayed by using different colors.

Optionally, the self-driving road segment includes an emergency assistance road segment, a partial driving assistance road segment, a combined driving assistance road segment, a conditional self-driving road segment, a highly self-driving road segment, and a fully self-driving road segment. The emergency assistance road segment, the partial driving assistance road segment, the combined driving assistance road segment, the conditional self-driving road segment, the highly self-driving road segment, and the fully self-driving road segment are displayed in the different display manners. The emergency assistance road segment and the partial driving assistance road segment are corresponding to a self-driving road segment of L1 in self-driving classification provided by SAE; the combined driving assistance road segment is corresponding to a self-driving road segment of L2; the conditional self-driving road segment is corresponding to a self-driving road segment of L3; the highly self-driving road segment is corresponding to a self-driving road segment of L4; and the fully self-driving road segment is corresponding to a self-driving road segment of L5.

For example, the emergency assistance road segment, the partial driving assistance road segment, the combined driving assistance road segment, the conditional self-driving road segment, the highly self-driving road segment, and the fully self-driving road segment are displayed by using the different colors.

Optionally, when the information about the recommended route includes segments in different areas, the segments in the different areas are displayed in different display manners.

For example, a starting location of the vehicle is in Xuhui District, Shanghai, and the target location is in Jing'an District, Shanghai. In this case, in the information about the recommended route, each of a road segment located in Xuhui District and a road segment located in Jing'an District is displayed in the different display manners. For example, each of the road segment in Xuhui District and the road segment in Jing'an District is displayed by using different colors.

FIG. 3 is a schematic diagram of recommended route information according to an embodiment of this application. As shown in FIG. 3, the recommended route is planned and displayed for the vehicle with the target location of the "municipal library". The user may select a route preference based on an actual situation. The route preference includes a default recommended route (namely, the recommended route preferred for self driving), a recommended route preferred with an expressway, a recommended route of avoiding an expressway, a recommended route with a lower toll, a recommended route preferred with a highway, and a recommended route with a fastest speed, and the like.

Three recommended routes displayed on the map are the recommended route preferred for self driving, a recommended route with the shortest duration, and a recommended route with the shortest distance, respectively. The three recommended routes are numbered separately. The recommended route preferred for self driving is numbered ①, the recommended route with the shortest duration is numbered ②, and the recommended route with the shortest distance is numbered ③. The user may select one recommended route for the navigation according to an actual requirement. If the user does not make a selection, the navigation is performed based on the recommended route preferred for self driving by default.

The map further displays information about each of the three recommended routes, such as a total distance, self-driving mileage, and whole-course estimated duration. For example, the total mileage of the recommended route preferred for self driving is 980 kilometers (km), the self-driving mileage is 827 km, and the whole-course estimated duration is 13 hours and 35 minutes.

In addition, the manual driving road segment and the self-driving road segment in each of the three recommended routes are further displayed on the map by using the different colors. For example, white represents the self-driving road segment, and gray represents the manual driving road segment.

In another possible implementation, when the target location information includes the location information of the parking spot, and location information of a destination in the information about the recommended route is also the location information of the parking spot, the self-driving road segment further includes a parking road segment. The parking road segment includes an automatic parking assist (auto parking assist, APA) road segment, a remote parking assist (remote parking assist, RPA) road segment, a home zone parking assist (home zone parking assist, HPA) road segment, and an automatic valet parking (automated valet parking, AVP) road segment. In the information about the recommended route, the APA road segment, the RPA road segment, the HPA road segment, and the AVP road segment are displayed by using different colors.

In an example, when the target location of the user is a parking spot whose specific parking spot location is known or whose corresponding number is known and which can ensure that no other vehicle is parked in the parking spot, the target location information input by the user may be a specific location or a corresponding number of a specific parking spot. For example, the target location information input by the user is location information of a parking spot of the user. The information about the recommended route includes the manual driving road segment and the self-driving road segment, where the self-driving road segment includes the parking road segment. The navigation that is performed based on the information about the recommended route can allow the vehicle to be directly parked at the parking spot indicated by the target location information from a point of departure, without an interactive operation during intermediate driving.

In another example, when the user does not know specific location information of a parking spot or cannot determine whether no other vehicle is parked at a specific parking spot, location information of an electronic fence may be used as the target location information. The electronic fence is a scope of a specific virtual area delineated on the map. A specific map content is presented in the scope of the area based on different purposes. The electronic fence in this embodiment of this application is mainly used for a parking function, and mainly displays a parking space. After the vehicle moves into the electronic fence based on the information about the recommended route, an available parking spot within the electronic fence is provided for the user to select.

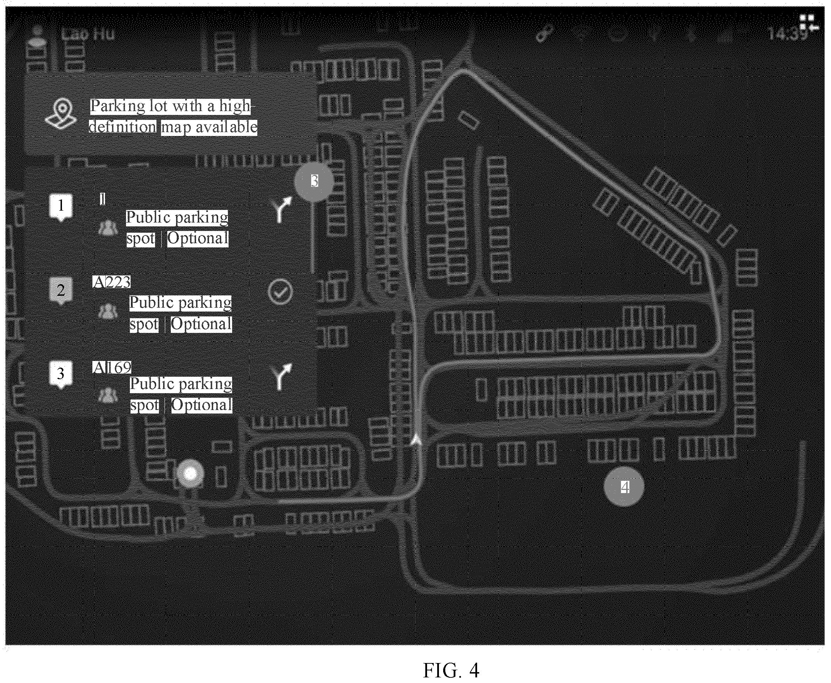

FIG. 4 is a schematic diagram of a parking road segment according to an embodiment of this application. As shown in FIG. 4, after the vehicle is navigated, based on the information about the recommended route, to the electronic fence where the parking spot is located, a map of a parking lot within the electronic fence is automatically zoomed in to present a state of an internal parking spot, and an optional parking spot is recommended.

In an example, the user may manually select a parking spot for parking based on the optional parking spot recommended, and a navigation system parks the vehicle at the parking spot based on a parking spot selected by the user.

For example, after the vehicle enters the parking lot, the navigation system recommends three parking spots to the user, and numbers of the three parking spots are "1", "A233", and "A169", respectively.

In another example, the user may set a parking spot that is currently closest to the vehicle as a default parking spot. After the vehicle enters the parking lot, the navigation system automatically searches for an unoccupied parking spot that is currently closest to the vehicle, and automatically parks the vehicle at the parking spot without manual selection by the user.

In still another possible implementation, when the vehicle travels in any one of the road segments in the information about the recommended route based on the information about the recommended route, mileage information of a distance between a current location of the vehicle and a starting location of a next road segment may be displayed in real time. When the mileage information of the distance between the current location of the vehicle and the starting location of the next road segment is less than or equal to preset mileage information, a prompt that the vehicle is about to switch to the next road segment is given. A manner of prompting that the vehicle is about to switch to the next road segment includes a text prompt and/or a voice prompt, and the like.

For example, the preset mileage information is 2 km. It is assumed that the vehicle currently travels in the manual driving road segment and that the next road segment is the self-driving road segment. When the vehicle travels in a current manual driving road segment, mileage information of a distance to a starting location of a next self-driving road segment may be displayed in real time. When a distance between a location of the vehicle in the current manual driving road segment and the starting location of the next self-driving road segment is equal to 2 km, a prompt that the vehicle is about to enter the next road segment is given. The manner of the prompt includes the text prompt and the voice prompt. For example, the text prompt "About to enter a self-driving road segment" is displayed on a display screen of the vehicle, and the voice prompt includes a voice instruction "About to enter a self-driving road segment". Starting from the distance between the current location of the vehicle and the starting location of the next self-driving road segment, which is 2 km, the prompt is given at an interval of 30s until the vehicle enters the self-driving road segment.

Optionally, switching from a current road segment to the next road segment by the vehicle based on the information about the recommended route further includes map switching.

For example, when the vehicle travels in the manual driving road segment, the navigation is performed by using a common map. When the vehicle travels in the self-driving road segment, the navigation is performed by using a high-definition map. When the vehicle switches from the manual driving road segment to the self-driving road segment, a map used for the navigation correspondingly switches from the common map to the high-definition map.

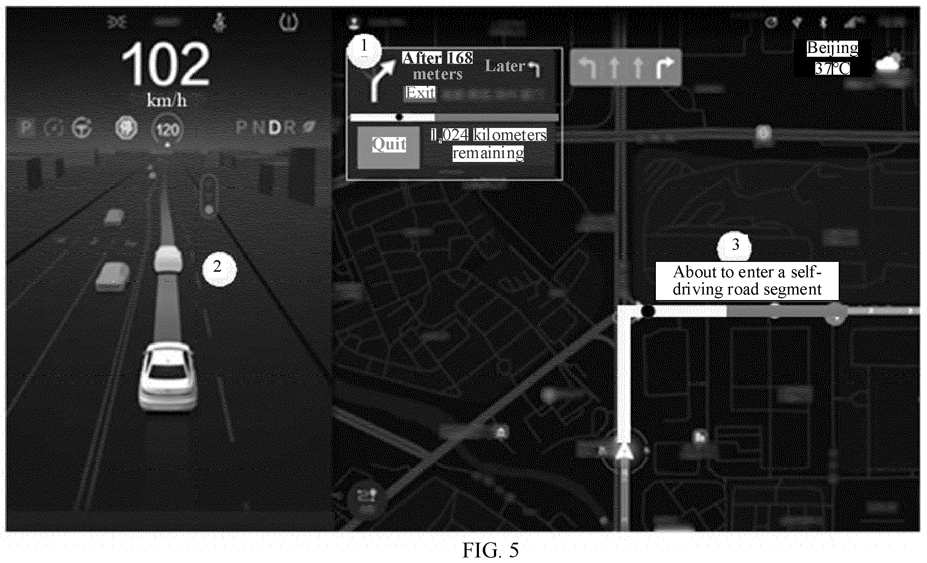

FIG. 5 is a schematic diagram of prompt information of switching different road segments according to an embodiment of this application. As shown in FIG. 5, the vehicle currently travels in the manual driving road segment. When mileage information of a distance between the vehicle and the starting location of the next road segment is less than or equal to the preset mileage information, a prompt that the vehicle is about to switch to the self-driving road segment is given. As shown by ③, "About to enter a self-driving road segment" is displayed on the map. As shown by ①, a process of the vehicle in the current road segment is displayed on the map in real time. There is one progress bar in ①, where white represents the manual driving road segment, gray represents the self-driving road segment, and a black dot represents a current location of the vehicle in the manual driving road segment, to display a current travel progress of the vehicle. As shown by ③, the manual driving road segment and the self-driving road segment are displayed on the map. A white road segment represents the manual driving road segment, a gray road segment represents the self-driving road segment, and a black dot represents a current location of the vehicle in the manual driving road segment on the map. As shown by ②, when a navigation line turns gray, the vehicle has entered the self-driving road segment and has enabled a self-driving mode.

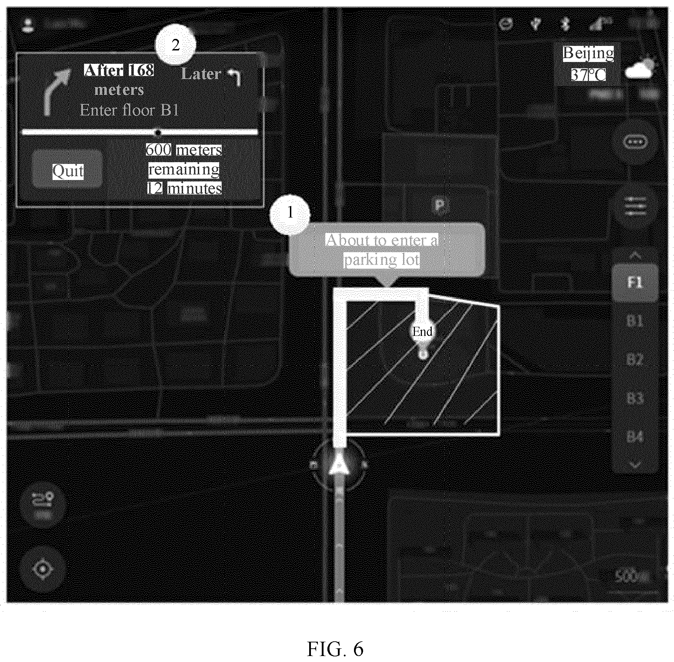

FIG. 6 is a schematic diagram of another prompt information of switching different road segments according to an embodiment of this application. As shown in FIG. 6, the vehicle is currently in the self-driving road segment, and is about to enter the parking lot within the electronic fence for parking. The electronic fence is filled with white oblique stripes. When a distance between the current location of the vehicle and the electronic fence is less than or equal to the preset mileage distance, a prompt that the vehicle is about to enter an electronic fence road segment is given. As shown by ①, "About to enter a parking lot" is displayed. As shown by ②, a travel process, remaining mileage information, and estimated remaining time information of the vehicle on a current self-driving road segment are displayed.

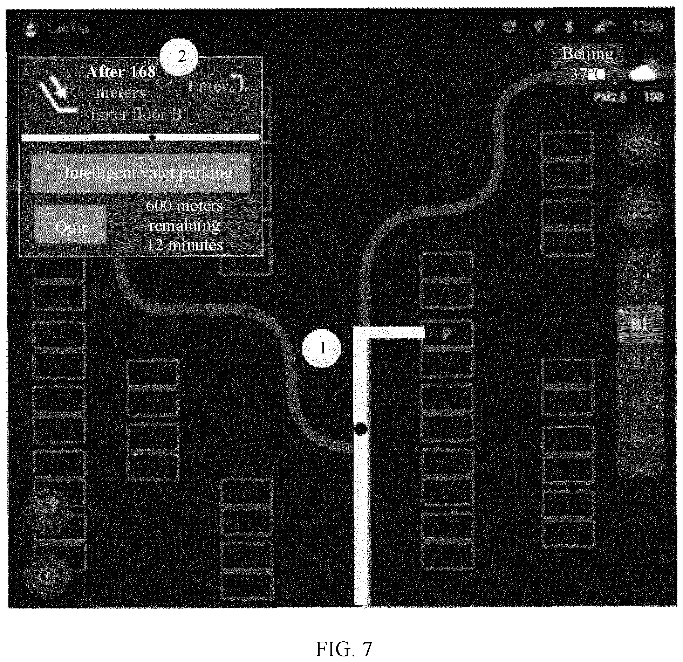

FIG. 7 is a schematic diagram of displaying travel process information according to an embodiment of this application. As shown in FIG. 7, after the vehicle enters the parking lot and a specific parking spot is determined, information about remaining mileage of a distance between the current location of the vehicle and a location of the parking spot, estimated remaining time, and a current travel process of the vehicle are displayed in real time. As shown by ②, a black dot represents the current location of the vehicle, and is used to display current process information of the vehicle. In addition, that the vehicle is currently 600 meters away from the parking spot and that estimated time is 12 minutes are displayed.

As shown by ①, the information about the recommended route to the parking spot is displayed on the map. A black dot represents information about the current location of the vehicle on the map, and is used to display process information of the vehicle on the map.

In still another possible implementation, after the vehicle arrives at, based on the information about the recommended route, the target location indicated by the target location information, whole-course statistical information and statistical information of the different road segments are displayed, where the whole-course statistical information includes total mileage information, total duration information, average hourly speed information, and an energy efficiency ratio, and the statistical information of the different road segments includes mileage information and duration information of each of the different road segments.

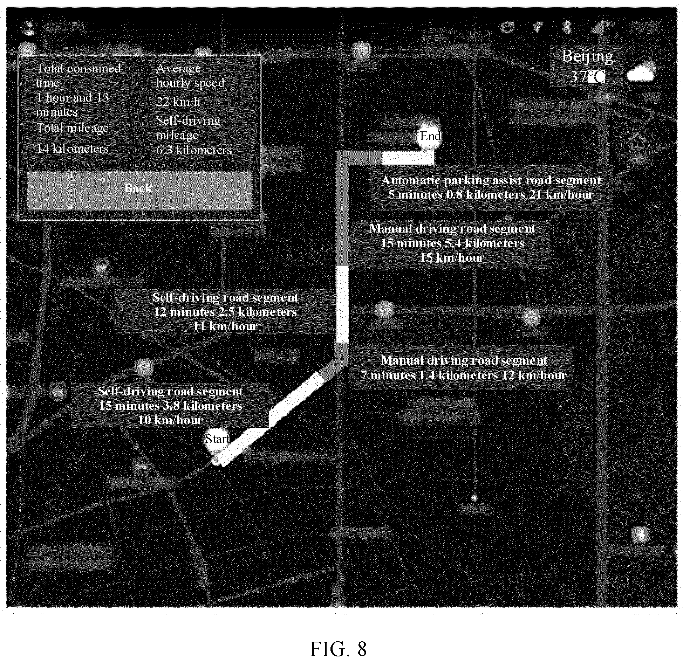

FIG. 8 is a schematic diagram of travel information according to an embodiment of this application. As shown in FIG. 8, total mileage information of 14 kilometers, total consumed time of 1 hour and 13 minutes, total self-driving mileage of 6.3 kilometers, and an average hourly speed of 22 kilometers/h (km/h) in a whole course, in which the vehicle travels to the target location based on the information about the recommended route, are displayed. Duration, mileage, and an average hourly speed in each different road segment in the information about the recommended route are further displayed, including duration, mileage, and an average hourly speed in each manual driving road segment, and duration, mileage, and an average hourly speed in each self-driving road segment. The self-driving road segment further includes the parking road segment.

According to the technical solution provided in this application, the information about the recommended route displayed based on the target location information of the vehicle includes location information and mileage information of a self-driving route, and a route preferred for self driving is recommended by default. This is more applicable to the self-driving vehicle.

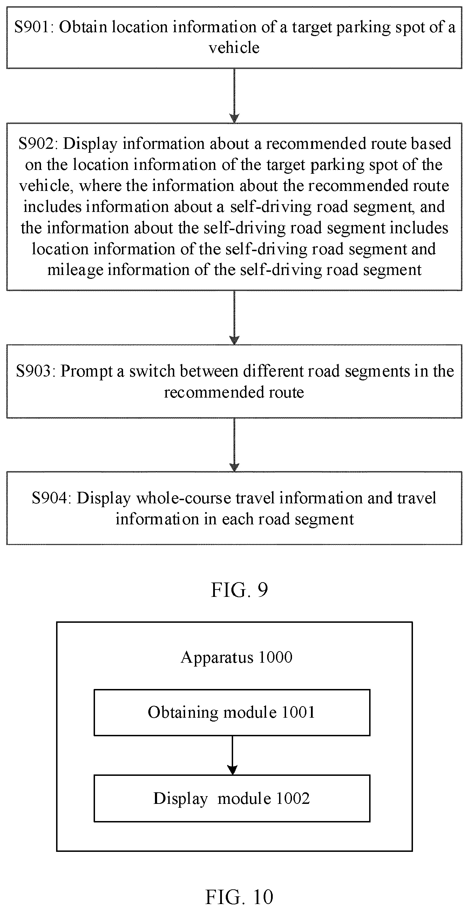

FIG. 9 is a schematic flowchart of another navigation method according to an embodiment of this application. As shown in FIG. 9, the method at least includes S901 to S904.

S901: Obtain location information of a target parking spot of a vehicle.

In an example, when a target location of a user is a parking spot whose specific parking spot location is known or whose corresponding number is known and which can ensure that no other vehicle is parked in the parking spot, the target location information input by the user may be a specific location or a corresponding number of a specific parking spot. For example, the target location information input by the user is location information of a parking spot of the user. Recommended route information includes a manual driving road segment and a self-driving road segment, where the self-driving road segment includes a parking road segment. Navigation that is performed based on the information about the recommended route can allow the vehicle to be directly parked at the parking spot indicated by the target location information from a point of departure, without an interactive operation during intermediate driving.

In another example, when the user does not know specific location information of a parking spot or cannot determine whether no other vehicle is parked at a specific parking spot, location information of an electronic fence may be used as the target location information. The electronic fence is a scope of a specific virtual area delineated on a map. A specific map content is presented in the scope of the area based on different purposes. The electronic fence in this embodiment of this application is mainly used for a parking function, and mainly displays a parking space. After the vehicle moves into the electronic fence based on the information about the recommended route, an available parking spot within the electronic fence is provided for the user to select.

S902: Display the information about the recommended route based on the location information of the target parking spot of the vehicle, where the information about the recommended route includes information about the self-driving road segment, and the information about the self-driving road segment includes location information of the self-driving road segment and mileage information of the self-driving road segment.

The recommended route is planned based on the obtained information about the target location of the vehicle, and the information about the recommended route is displayed. The information about the recommended route includes the information about the self-driving road segment, where the information about the self-driving road segment includes the location information of the self-driving road segment and the mileage information of the self-driving road segment. A recommended route preferred for self driving is selected by default for the navigation. The recommended route preferred for self driving represents a recommended route that shows the largest proportion of mileage of the self-driving road segment in total mileage of the recommended route.

In a possible implementation, the information about the recommended route further includes information about proportions of road segments in the recommended route in a whole course of the recommended route, and the road segments in the recommended route include the self-driving road segment and the manual driving road segment. The information about the recommended route displays the mileage information of the self-driving road segment, and information about proportions of the self-driving road segment and the manual driving road segment in the total mileage of the recommended route. Each of the manual driving road segment and the self-driving road segment that are in the information about the recommended route is displayed in different display manners.

For example, each of the manual driving road segment and the self-driving road segment in the recommended route is displayed by using different colors.

Optionally, the self-driving road segment includes an emergency assistance road segment, a partial driving assistance road segment, a combined driving assistance road segment, a conditional self-driving road segment, a highly self-driving road segment, and a fully self-driving road segment. The emergency assistance road segment, the partial driving assistance road segment, the combined driving assistance road segment, the conditional self-driving road segment, the highly self-driving road segment, and the fully self-driving road segment are displayed in the different display manners. The emergency assistance road segment and the partial driving assistance road segment are corresponding to a self-driving road segment of L1 in self-driving classification provided by SAE; the combined driving assistance road segment is corresponding to a self-driving road segment of L2; the conditional self-driving road segment is corresponding to a self-driving road segment of L3; the highly self-driving road segment is corresponding to a self-driving road segment of L4; and the fully self-driving road segment is corresponding to a self-driving road segment of L5.

For example, the emergency assistance road segment, the partial driving assistance road segment, the combined driving assistance road segment, the conditional self-driving road segment, the highly self-driving road segment, and the fully self-driving road segment are displayed by using the different colors. Optionally, the self-driving road segment further includes the parking road segment. The parking road segment includes an APA road segment, an RPA road segment, an HPA road segment, and an AVP road segment. The APA road segment, the RPA road segment, the HPA road segment, and the AVP road segment are displayed in different display manners.

For example, in the information about the recommended route, the APA road segment, the RPA road segment, the HPA road segment, and the AVP road segment are displayed by using different colors.

Optionally, when the information about the recommended route includes segments in different areas, the segments in the different areas are displayed in different display manners.

For example, a starting location of the vehicle is in Xuhui District, Shanghai, and the target location is in Jing'an District, Shanghai. In this case, in the information about the recommended route, each of a road segment located in Xuhui District and a road segment located in Jing'an District is displayed in the different display manners. For example, each of the road segment in Xuhui District and the road segment in Jing'an District is displayed by using different colors.

S903: Prompt a switch between different road segments in the recommended route.

In a possible implementation, when the vehicle travels in any one of the road segments in the information about the recommended route based on the information about the recommended route, mileage information of a distance between a current location of the vehicle and a starting location of a next road segment may be displayed in real time. When the mileage information of the distance between the current location of the vehicle and the starting location of the next road segment is less than or equal to preset mileage information, a prompt that the vehicle is about to switch to the next road segment is given. A manner of prompting that the vehicle is about to switch to the next road segment includes a text prompt and/or a voice prompt, and the like.

For example, the preset mileage information is 2 km. It is assumed that the vehicle currently travels in the manual driving road segment and that the next road segment is the self-driving road segment. When the vehicle travels in a current manual driving road segment, mileage information of a distance to a starting location of a next self-driving road segment may be displayed in real time. When a distance between a location of the vehicle in the current manual driving road segment and the starting location of the next self-driving road segment is equal to 2 km, a prompt that the vehicle is about to enter the next road segment is given. The manner of the prompt includes the text prompt and the voice prompt. For example, the text prompt "About to enter a self-driving road segment" is displayed on a display screen of the vehicle, and the voice prompt includes a voice instruction "About to enter a self-driving road segment". Starting from the distance between the current location of the vehicle and the starting location of the next self-driving road segment, which is 2 km, the prompt is given at an interval of 30s until the vehicle enters the self-driving road segment.

Optionally, switching from a current road segment to the next road segment by the vehicle based on the information about the recommended route further includes map switching.

For example, when the vehicle travels in the manual driving road segment, the navigation is performed by using a common map. When the vehicle travels in the self-driving road segment, the navigation is performed by using a high-definition map. When the vehicle switches from the manual driving road segment to the self-driving road segment, a map used for the navigation correspondingly switches from the common map to the high-definition map.

For example, reference may be made to the switch prompt method or the switch display method shown in FIG. 5, FIG. 6, or FIG. 7. Details are not described herein again.

S904: Display whole-course travel information and travel information in each road segment.

In a possible implementation, after the vehicle arrives at, based on the information about the recommended route, the target location indicated by the target location information, whole-course statistical information and statistical information of the different road segments are displayed, where the whole-course statistical information includes total mileage information, total duration information, average hourly speed information, and an energy efficiency ratio, and the statistical information of the different road segments includes mileage information and duration information of each of the different road segments.

For example, reference may be made to the method for displaying the whole-course travel information and the travel information in each road segment shown in FIG. 8. Details are not described herein again.

According to the technical solution provided in this application, the information about the recommended route is displayed based on the location information of the target parking spot of the vehicle, and the information about the recommended route includes the location information and the mileage information of the self-driving road segment. In a process of traveling based on the information about the recommended route, the switch between the different road segments can be prompted. After the vehicle travels to the target parking spot, the whole-course travel information and the travel information in each road segment can be displayed. This simplifies operation steps of the user, improves driving efficiency, and improves driving experience of the user.

FIG. 10 is a schematic diagram of a structure of a navigation apparatus according to an embodiment of this application. As shown in FIG. 10, an apparatus 1000 may include an obtaining module 1001 and a display module 1002.

In a possible implementation, the apparatus 1000 may be configured to implement the method shown in FIG. 2. For example, the obtaining module 1001 is configured to implement S201, and the display module 1002 is configured to implement S202.

In another possible implementation, the apparatus 1000 further includes a prompt module. The apparatus 1000 in the implementation may be configured to implement the method shown in FIG. 9. For example, the obtaining module 1001 is configured to implement S901, the display module 1002 is configured to implement S902 and S904, and the prompt module is configured to implement S903.

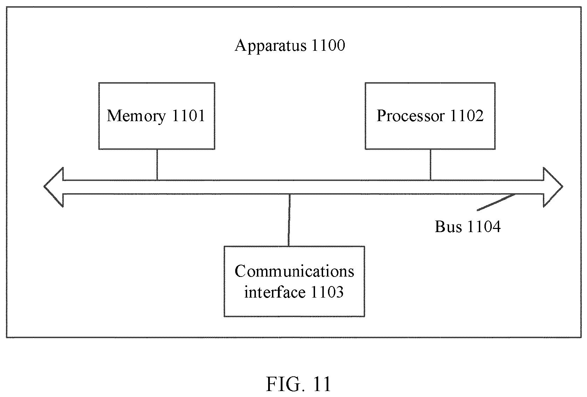

FIG. 11 is a schematic diagram of a structure of a navigation apparatus according to another embodiment of this application. As shown in FIG. 11, an apparatus 1100 in this embodiment includes a memory 1101, a processor 1102, a communications interface 1103, and a bus 1104. The memory 1101, the processor 1102, and the communications interface 1103 are communicatively connected to each other through the bus 1104.

The memory 1101 may be a read-only memory (read only memory, ROM), a static storage device, a dynamic storage device, or a random access memory (random access memory, RAM). The memory 1101 may store a program. When the program stored in the memory 1101 is executed by the processor 1102, the processor 1102 may be configured to perform the steps of the methods shown in FIG. 2 and FIG. 9.

The processor 1102 may be a general-purpose central processing unit (central processing unit, CPU), a microprocessor, an application specific integrated circuit (application specific integrated circuit, ASIC), or one or more integrated circuits, configured to execute a related program, to implement the navigation method in the method embodiments of this application.

The processor 1102 may alternatively be an integrated circuit chip and has a signal processing capability. In an implementation process, the steps of the methods in the embodiments of this application may be completed by using a hardware integrated logic circuit in the processor 1102 or by using instructions in a form of software.

The processor 1102 may alternatively be a general-purpose processor, a digital signal processor (digital signal processing, DSP), an application specific integrated circuit (ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in the embodiments of this application. The general-purpose processor may be a microprocessor, or the processor may be any conventional processor, or the like.

The steps in the methods disclosed with reference to the embodiments of this application may be directly performed and completed by a hardware decoding processor, or may be performed and completed by a combination of hardware and software modules in the decoding processor. The software module may be located in a mature storage medium in the art such as a random access memory, a flash memory, a read-only memory, a programmable read-only memory, an electrically erasable programmable memory, or a register. The storage medium is located in the memory 1101. The processor 1102 reads information in the memory 1101, and completes, in combination with hardware of the processor 1102, functions that need to be performed in the methods in the embodiments of this application. For example, the processor 1102 may perform the steps/functions in the embodiments shown in FIG. 2 and FIG. 9.

The communications interface 1103 may use, but is not limited to, a transceiver apparatus such as a transceiver, to implement communication between the apparatus 1100 and another device or a communications network.

The bus 1104 may include a path for transferring information between components (for example, the memory 1101, the processor 1102, and the communications interface 1103) of the apparatus 1100.

It should be understood that, the apparatus 1100 shown in this embodiment of this application may be an electronic device, or may be a chip configured in an electronic device.

It should be understood that, the processor in this embodiment of this application may be a central processing unit (central processing unit, CPU). The processor may alternatively be another general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor, or the like.

It may be understood that the memory in this embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example rather than limitation, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used for implementation, the foregoing embodiments may be all or partially implemented in a form of a computer program product. The computer program product includes one or more computer instructions or computer programs. When the program instructions or the computer programs are loaded and executed on the computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, infrared, radio, and microwave, or the like) manner. The computer-readable storage medium may be any usable medium that can be accessed by the computer, or a data storage device, for example, a server or a data center in which one or more usable media are integrated. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items" or a similar expression means any combination of these items, including any combination of a single item or a plurality of items. For example, at least one of a, b, or c may indicate: a, b, c, a-b, a-c, b-c, or a-b-c, where a, b, and c may be singular or plural.

It should be understood that, in the embodiments of this application, sequence numbers of the foregoing processes do not mean execution sequences. The execution sequences of the processes should be determined based on functions and internal logic of the processes, and should not constitute any limitation on implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A skilled person may use different methods for particular applications to implement the described functions, but this implementation should not be considered as beyond the scope of this application.

A person skilled in the art may clearly understand that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in other manners. For example, the described apparatus embodiments are merely examples. For example, division into the units is merely logical function division and may be another division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions in this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A navigation method, comprising:
obtaining (S201) target location information of a vehicle;
displaying (S202) recommended route information based on the target location information, wherein the information about the recommended route comprises information about a self-driving road segment, and the information about the self-driving road segment comprises location information of the self-driving road segment and distance information of the self-driving road segment, and **characterised by**:
displaying whole-course statistical information and statistical information of the different road segments after the vehicle arrives at, based on the information about the recommended route, the target location indicated by the target location information, wherein the whole-course statistical information comprises total distance information, total duration information, average hourly speed information, and an energy efficiency ratio, and the statistical information of the different road segments comprises distance information and duration information of each of the different road segments.

2. The method according to claim 1, further comprising:
displaying, in different display manners, different road segments in the information about the recommended route, wherein the different road segments comprise a manual driving road segment and the self-driving road segment.

3. The method according to claim 2, wherein the self-driving road segment comprises an emergency assistance road segment, a partial driving assistance road segment, a combined driving assistance road segment, a conditional self-driving road segment, a highly self-driving road segment, and a fully self-driving road segment.

4. The method according to any one of claims 1 to 3, wherein the target location information comprises location information of a parking spot, and location information of a destination in the information about the recommended route comprises the location information of the parking spot.

5. The method according to claim 4, wherein the self-driving road segment further comprises a parking road segment.

6. The method according to claim 5, wherein the parking road segment comprises an automatic parking assist APA road segment, a remote parking assist RPA road segment, a home zone parking assist HPA road segment, and an automatic valet parking AVP road segment.

7. The method according to any one of claims 2 to 6, wherein the displaying, in different display manners, different road segments in the information about the recommended route comprises:
displaying the different road segments in the information about the recommended route by using different colors.

8. The method according to any one of claims 1 to 7, wherein the displaying recommended route information based on the target location information further comprises:
displaying distance information of each of the different road segments.

9. The method according to any one of claims 1 to 8, further comprising:
when the vehicle travels in any one of the road segments, displaying distance information of a distance between a current location of the vehicle and a starting location of a next road segment.

10. The method according to any one of claims 1 to 9, further comprising:
when the distance information of the distance between the current location of the vehicle and the starting location of the next road segment is less than or equal to preset distance information, prompting that the vehicle is about to switch to the next road segment.

11. The method according to claim 10, wherein a manner of the prompting that the vehicle is about to switch to the next road segment comprises a text prompt and/or a voice prompt.

12. A navigation apparatus (1000), comprising:
an obtaining module (1001), configured to obtain target location information of a vehicle; and
a display module (1002), configured to display recommended route information based on the target location information, wherein the information about the recommended route comprises information about a self-driving road segment, and the information about the self-driving road segment comprises location information of the self-driving road segment and distance information of the self-driving road segment, and
characterised in thatthe display module is further configured to:
display whole-course statistical information and statistical information of the different road segments after the vehicle arrives at, based on the information about the recommended route, the target location indicated by the target location information, wherein the whole-course statistical information comprises total mileage information, total duration information, average hourly speed information, and an energy efficiency ratio, and the statistical information of the different road segments comprises mileage information and duration information of each of the different road segments.

13. A self-driving vehicle, comprising the navigation apparatus according to claim 12.

14. A computer-readable medium, wherein the computer-readable medium stores program code to be executed by a computer, and the program code comprises instructions used to perform the method according to any one of claims 1 to 11.

15. A computer program product, wherein the computer program product comprises instructions, and when the instructions are executed, a computer is enabled to perform the method according to any one of claims 1 to 11.

## Patentansprüche

1. Navigationsverfahren, das Folgendes umfasst:
Erhalten (S201) von Zielortinformationen eines Fahrzeugs;
Anzeigen (S202) von Informationen über eine empfohlene Route basierend auf den Zielortinformationen, wobei die Informationen über die empfohlene Route Informationen über ein Straßensegment für autonomes Fahren umfassen und die Informationen über das Straßensegment für autonomes Fahren Standortinformationen des Straßensegments für autonomes Fahren und Abstandsinformationen des Straßensegments für autonomes Fahren umfassen, und **gekennzeichnet durch**:
Anzeigen statistischer Informationen des gesamten Kurses und statistischer Informationen der verschiedenen Straßensegmente, nachdem das Fahrzeug basierend auf den Informationen über die empfohlene Route an dem **durch** die Zielortinformationen angegebenen Zielort ankommt, wobei die statistischen Informationen des gesamten Kurses Gesamtdistanzinformationen, Gesamtdauerinformationen, Informationen über die durchschnittliche stündliche Geschwindigkeit und ein Energieeffizienzverhältnis umfassen und die statistischen Informationen der verschiedenen Straßensegmente Distanzinformationen und Dauerinformationen jedes der verschiedenen Straßensegmente umfassen.

2. Verfahren nach Anspruch 1, das ferner Folgendes umfasst:
Anzeigen, auf unterschiedliche Anzeigeweisen, verschiedener Straßensegmente in den Informationen über die empfohlene Route, wobei die verschiedenen Straßensegmente ein Straßensegment für manuelles Fahren und das Straßensegment für autonomes Fahren umfassen.

3. Verfahren nach Anspruch 2, wobei das Straßensegment für autonomes Fahren ein Notfallassistenz-Straßensegment, ein Teilfahrassistenz-Straßensegment, ein Straßensegment für kombinierte Fahrassistenz, ein Straßensegment für bedingtes autonomes Fahren, ein Straßensegment für stark autonomes Fahren und ein Straßensegment für vollständig autonomes Fahren umfasst.

4. Verfahren nach einem der Ansprüche 1 bis 3, wobei die Zielortinformationen Standortinformationen eines Parkplatzes umfassen und Standortinformationen eines Ziels in den Informationen über die empfohlene Route die Standortinformationen des Parkplatzes umfassen.

5. Verfahren nach Anspruch 4, wobei das Straßensegment für autonomes Fahren ferner ein Parkstraßensegment umfasst.

6. Verfahren nach Anspruch 5, wobei das Parkstraßensegment ein Einparkassistent- bzw. APA-Straßensegment, ein Fernparkassistent- bzw. RPA-Straßensegment, ein "Homezone"-Parkassistent- bzw. HPA-Straßensegment und ein "Automatic-Valet-Parking"- bzw. AVP-Straßensegment umfasst.

7. Verfahren nach einem der Ansprüche 2 bis 6, wobei das Anzeigen, auf unterschiedliche Anzeigeweisen, verschiedener Straßensegmente in den Informationen über die empfohlene Route Folgendes umfasst:
Anzeigen der verschiedenen Straßensegmente in den Informationen über die empfohlene Route unter Verwendung verschiedener Farben.

8. Verfahren nach einem der Ansprüche 1 bis 7, wobei das Anzeigen von Informationen über eine empfohlene Route basierend auf den Zielortinformationen ferner Folgendes umfasst:
Anzeigen von Distanzinformationen jedes der verschiedenen Straßensegmente.

9. Verfahren nach einem der Ansprüche 1 bis 8, das ferner Folgendes umfasst:
wenn das Fahrzeug in einem beliebigen der Straßensegmente fährt, Anzeigen von Distanzinformationen einer Distanz zwischen einem aktuellen Standort des Fahrzeugs und einem Startort eines nächsten Straßensegments.

10. Verfahren nach einem der Ansprüche 1 bis 9, das ferner Folgendes umfasst:
wenn die Distanzinformationen der Distanz zwischen dem aktuellen Standort des Fahrzeugs und dem Startort des nächsten Straßensegments kleiner oder gleich voreingestellten Distanzinformationen sind, Melden, dass das Fahrzeug in Kürze zum nächsten Straßensegment wechselt.

11. Verfahren nach Anspruch 10, wobei eine Art und Weise des Meldens, dass das Fahrzeug in Kürze zum nächsten Straßensegment wechselt, eine Textmeldung und/oder eine Sprachmeldung umfasst.

12. Navigationseinrichtung (1000), die Folgendes umfasst:
ein Erhaltemodul (1001), ausgelegt zum Erhalten von Zielortinformationen eines Fahrzeugs; und
ein Anzeigemodul (1002), ausgelegt zum Anzeigen von Informationen über eine empfohlene Route basierend auf den Zielstandortinformationen, wobei die Informationen über die empfohlene Route Informationen über ein Straßensegment für autonomes Fahren umfassen und die Informationen über das Straßensegment für autonomes Fahren Standortinformationen des Straßensegments für autonomes Fahren und Abstandsinformationen des Straßensegments für autonomes Fahren umfassen, und **dadurch gekennzeichnet, dass** das Anzeigemodul ferner zu Folgendem ausgelegt ist:
Anzeigen statistischer Informationen des gesamten Kurses und statistischer Informationen der verschiedenen Straßensegmente, nachdem das Fahrzeug basierend auf den Informationen über die empfohlene Route an dem durch die Zielstandortinformationen angegebenen Zielstandort ankommt, wobei die statistischen Informationen des gesamten Kurses Gesamtfahrleistungsinformationen, Gesamtdauerinformationen, Informationen über die durchschnittliche stündliche Geschwindigkeit und ein Energieeffizienzverhältnis umfassen und die statistischen Informationen der verschiedenen Straßensegmente Fahrleistungsinformationen und Dauerinformationen jedes der verschiedenen Straßensegmente umfassen.

13. Autonom fahrendes Fahrzeug, das die Navigationseinrichtung nach Anspruch 12 umfasst.

14. Computerlesbares Medium, wobei das computerlesbare Medium einen Programmcode zur Ausführung durch einen Computer speichert und der Programmcode Anweisungen umfasst, die zum Durchführen des Verfahrens nach einem der Ansprüche 1 bis 11 verwendet werden.

15. Computerprogrammprodukt, wobei das Computerprogrammprodukt Anweisungen umfasst und eine Ausführung der Anweisungen ermöglicht, dass ein Computer das Verfahren nach einem der Ansprüche 1 bis 11 durchführt.

## Revendications

1. Procédé de navigation comprenant les étapes suivantes :
obtenir (S201) des informations d'emplacement cible d'un véhicule ;
afficher (S202) des informations d'itinéraire recommandé sur la base des informations d'emplacement cible, les informations concernant l'itinéraire recommandé comprenant des informations concernant un segment de route en conduite autonome, et les informations concernant le segment de route en conduite autonome comprenant des informations d'emplacement du segment de route en conduite autonome et des informations de distance du segment de route en conduite autonome, le procédé étant **caractérisé par** l'étape suivante :
afficher des informations statistiques sur l'ensemble du parcours et des informations statistiques des différents segments de route après l'arrivée du véhicule, sur la base des informations sur l'itinéraire recommandé, à l'emplacement cible indiqué par les informations d'emplacement cible, les informations statistiques sur l'ensemble du parcours comprenant des informations sur la distance totale, des informations sur la durée totale, des informations sur la vitesse horaire moyenne et un rapport d'efficacité énergétique, et les informations statistiques des différents segments de route comprenant des informations sur la distance et des informations sur la durée de chacun des différents segments de route.

2. Procédé selon la revendication 1, comprenant en outre l'étape suivante :
afficher, de différentes manières d'affichage, différents segments de route dans les informations relatives à l'itinéraire recommandé, les différents segments de route comprenant un segment de route à conduite manuelle et le segment de route en conduite autonome.

3. Procédé selon la revendication 2, dans lequel le segment de route en conduite autonome comprend un segment de route avec assistance d'urgence, un segment de route avec assistance à la conduite partielle, un segment de route avec assistance à la conduite combinée, un segment de route en conduite autonome conditionnelle, un segment de route en conduite hautement autonome et un segment de route en conduite entièrement autonome.

4. Procédé selon l'une quelconque des revendications 1 à 3, dans lequel les informations d'emplacement cible comprennent des informations d'emplacement d'une place de stationnement, et les informations d'emplacement d'une destination dans les informations concernant l'itinéraire recommandé comprennent les informations d'emplacement de la place de stationnement.

5. Procédé selon la revendication 4, dans lequel le segment de route en conduite autonome comprend en outre un segment de route de stationnement.

6. Procédé selon la revendication 5, dans lequel le segment de route de stationnement comprend un segment de route d'assistance automatique au stationnement, APA, un segment de route d'assistance au stationnement à distance, RPA, un segment de route d'assistance au stationnement en zone résidentielle, HPA, et un segment de route de stationnement automatique avec service de voiturier, AVP.

7. Procédé selon l'une quelconque des revendications 2 à 6, dans lequel l'affichage, avec différentes manières d'affichage, de segments de route différents dans les informations sur l'itinéraire recommandé, comprend l'étape suivante :
afficher les différents segments de route dans les informations sur l'itinéraire recommandé en utilisant différentes couleurs.

8. Procédé selon l'une quelconque des revendications 1 à 7, dans lequel l'affichage d'informations d'itinéraire recommandé sur la base des informations d'emplacement cible comprend en outre l'étape suivante :
afficher des informations de distance de chacun des différents segments de route.

9. Procédé selon l'une quelconque des revendications 1 et 8, comprenant en outre l'étape suivante :
lorsque le véhicule se déplace dans l'un quelconque des segments de route, afficher des informations de distance relatives à une distance entre un emplacement actuel du véhicule et un emplacement de départ d'un segment de route suivant.

10. Procédé selon l'une quelconque des revendications 1 et 9, comprenant en outre l'étape suivante :
lorsque les informations de distance relatives à la distance entre l'emplacement actuel du véhicule et l'emplacement de départ du segment de route suivant sont inférieures ou égales aux informations de distance prédéfinies, indiquer que le véhicule est sur le point de passer au segment de route suivant.

11. Procédé selon la revendication 10, dans lequel une manière d'indiquer que le véhicule est sur le point de passer au segment de route suivant comprend une indication textuelle et/ou une indication vocale.

12. Appareil de navigation (1000) comprenant :
un module d'obtention (1001), configuré pour obtenir des informations d'emplacement cible d'un véhicule ; et
un module d'affichage (1002), configuré pour afficher des informations d'itinéraire recommandé sur la base des informations de localisation de cible, les informations concernant l'itinéraire recommandé comprenant des informations concernant un segment de route en conduite autonome, et les informations concernant le segment de route en conduite autonome comprenant des informations de localisation du segment de route en conduite autonome et des informations de distance du segment de route en conduite autonome, et
le module d'affichage étant **caractérisé en ce qu'**il est en outre configuré pour :
afficher des informations statistiques sur l'ensemble du parcours et des informations statistiques des différents segments de route après l'arrivée du véhicule, sur la base des informations sur l'itinéraire recommandé, à l'emplacement cible indiqué par les informations d'emplacement cible, les informations statistiques sur l'ensemble du parcours comprenant des informations sur le kilométrage total, des informations sur la durée totale, des informations sur la vitesse horaire moyenne et un rapport d'efficacité énergétique, et les informations statistiques des différents segments de route comprenant des informations sur le kilométrage et des informations sur la durée de chacun des différents segments de route.

13. Véhicule autonome, comprenant l'appareil de navigation selon la revendication 12.

14. Support lisible par ordinateur, le support lisible par ordinateur stockant un code de programme devant être exécuté par un ordinateur, et le code de programme comprenant des instructions utilisées pour exécuter le procédé selon l'une quelconque des revendications 1 à 11.

15. Produit programme informatique, le produit programme informatique comprenant des instructions et, lorsque les instructions sont exécutées, un ordinateur peut exécuter le procédé selon l'une quelconque des revendications 1 à 11.
